# EUROPEAN PATENT APPLICATION

(11) **EP 3 389 304 A1**
(43) Date of publication of application: **17.10.2018**
(21) Application number: 17166700.9
(22) Date of filing: 14.04.2017
(51) Int. Cl.: H04W 24/08, H04W 88/18

(54) **DETECTION OF BEHAVIOURAL PATTERNS IN A WIRELESS NETWORK**

(71) Applicant: Nokia Solutions and Networks Oy, 02610 Espoo (FI)
(72) Inventor: Ligata, Amir, 2018 Antwerpen (BE)
(74) Representative: IP HILLS NV

(57) **Abstract**

A network management center (400) for determining patterns in a wireless communication network (420) is disclosed comprising a monitoring module (401) arranged for obtaining a first set of metric data sets for different first time periods; and wherein a metric data set comprises a second set of metric data vectors for consecutive second time periods within each first time period; and wherein a data vector comprises a third set of wireless device metrics; and wherein each wireless device metric is indicative for a performance of the wireless communication network in relation with the respective second time period. The network management center (400) also comprises a pattern generation module (402) arranged for determining a fourth set of groups of metric data sets from the first set of metric data sets such that each group only comprises metric data sets with similar metric data vectors thereby identifying by the fourth set a set of different behavioural patterns within the wireless communication network.

The application is directed also to a data processing system configured to operate as such a network management center and to the corresponding computer-implemented method and computer program product for perfoming that method.

## Description

### Technical Field

The present disclosure generally relates, among others, to a network management center for analysing a wireless communication network, for example a Wi-fi network.

### Background

Home Wi-Fi networks are continuously growing because of the increasing variety in available applications and devices, e.g., mobile phones, tablets, laptops, wireless sound systems, Set-Top-Boxes (STBs), smart TVs, IoT, etc. Wi-Fi connectivity is therefore deemed a necessity in indoor environments and, hence, plays an important role in day-to-day activities.

In order to guarantee the required quality-of-service (QoS) of Wi-Fi networks, different home network management and troubleshooting mechanisms have been proposed. Most of these are based on Key Performance Indicators (KPIs) and Key Quality Indicators (KQIs). These are typically determined from parameters acquired over a certain time window, e.g., on an hourly or daily basis by a sliding window. By the obtained KPIs and KQIs, a degrading performance in a wireless network can then be detected and solved.

### Summary

The above solution has different drawback and shortcomings. First, the measured indicator is only applicable to the fixed time window which is inherently defined by the KPI/KQI. Second, only a single dimension is covered. For example, only the coverage is taken into account by averaging the signal strength corresponding to a particular device. However, the impact or dependency to other dimensions, and thus variables, is neglected. Third, the dynamics are not taken into account and, thus, significant information is lost. Fourth, a solution applied after detection cannot be applied to another network because network specific settings are not derivable from the KPIs/KQIs. Instead the same threshold settings are applied to each network thereby obtaining an inferior solution.

It is an object of the present disclosure to overcome the above shortcomings and to provide a solution that quantifies how a wireless network performs while keeping track of network specific variables and time dependent aspects.

This object is achieved, according to a first aspect, by a network management center for determining patterns in a wireless communication network comprising:
- a monitoring module arranged for obtaining a first set of metric data sets for different first time periods; and wherein a metric data set comprises a second set of metric data vectors for consecutive second time periods within each first time period; and wherein a data vector comprises a third set of wireless device metrics; and wherein each wireless device metric is indicative for a performance of the wireless communication network in relation with the respective second time period; and
- a pattern generation module arranged for determining a fourth set of groups of metric data sets from the first set of metric data sets such that each group only comprises metric data sets with similar metric data vectors thereby identifying by the fourth set a set of different behavioural patterns within the wireless communication network.

In other words, the performance of a network is not quantified according to a single parameter but by the identification of different patterns in the way the network behaves, i.e., by the identification of behavioural patterns. In order to derive such patterns, the network analyser takes different metric data, a metric data vector, that is related to a short period, i.e., the second time period, for example around one hour, preferably somewhere in the range of 10 to 120 minutes. Then, a set of consequent data vectors over a larger period, the first time period, for example one day, is considered together and defines a metric data set. Such metric data set could for example be represented as a two dimensional matrix where the rows represent a single metric and the columns the different metric vectors. Different of such metric data sets, the first set, are then compared with each other and the similar data sets are grouped together. One group thus comprises data sets that are similar to each other and, thus, that represent a same or similar behaviour of the wireless network, for example, a Wi-fi network.

Examples of wireless device metrics are the downstream throughput, the upstream throughput, the number of connected devices, an interference measure, a contention measure, a coverage measure or an overload measure. Each of these metrics may relate to one of the wireless devices in the wireless network.

An advantage of determining the behavioural patterns by the above management center, is that activities that can be repetitive in time can be analysed because inherent user routines related to Wi-Fi usage will be captured by such a behavioural pattern. Moreover, such behavioural patterns are extremely valuable from the home network management perspective as they embody the users' Wi-Fi footprint and can be further used to enhance the Wi-Fi network's operation and management instead of the key performance indicators (KPIs) or key quality indicators (KQIs). A further advantage is that the behavioural pattern is not fixed to a predefined window, but may span over a variable time window depending on the pattern. Furthermore, the metric data vector is maintained in the pattern and, thus, the multi-dimensionality is maintained, thereby maintaining correlation between different metrics. Furthermore, the behavioural patterns may also comprise network specific metrics, i.e., metrics that define the topology of the network. Therefore, behavioural patterns between different networks become comparable.

According to an embodiment, the monitoring module is further arranged to acquire first device parameters from one or more wireless devices in the wireless communication network within at least every second time period and to determine from these parameters the respective wireless device metrics.

Ways for obtaining such parameters and, thus, for obtaining the metrics are readily available, for example by use of the TR-181 standard for remote management of network devices. This allows obtaining a whole range of useful device parameters among which for example: the total number of bytes sent, the total number of bytes received, the total number of erroneous bytes sent, the total number of erroneous bytes received, the total number of packets sent, the total number of packets received, the total number of sent packets that were discarded, the total number of received packets that were discarded, the total number of retransmitted packets, the total number of failed retransmissions, the total number of associated devices, the total number of clear channel assessment requests and the total number of clear channel assessment reports.

According to an embodiment the behavioural pattern is defined by a similarity vector and the pattern generation module is further arranged to classify two metric data vectors as similar when the difference between the two metric data vectors is smaller than the similarity vector.

In other words, the similarity vector thus defines a distance between metric data vectors and, thus, by comparing metric data vector in one data set with the corresponding metric data vectors of another set, a distance or similarity between different data sets is obtained.

Advantageously, the pattern generation module is further arranged to only identify a group of the fourth set as a behavioural pattern when an amount of metric data sets in the group is larger than a first predefined threshold. This allows filtering the data set by removal of data sets that most probably do not belong to a behavioural pattern.

Advantageously, the pattern generation module is further arranged to merge groups of the fourth sets into a merged group when the groups overlap by at least a predefined number of metric data sets. By the definition of a behavioural pattern, the same data set can belong to different groups and thus to different behavioural patterns. When groups show a considerable overlap in data sets, this may indicate that the data sets of both groups belong to a same larger pattern although not all metrics are similar.

According to an embodiment, the network management center may operate in real-time in an continuous matter. To this respect, the monitoring module is further arranged to obtain a new metric data set and the pattern generation module is further arranged to update the set of groups and the set of different behavioural patterns with the new metric data set thereby obtaining an updated fourth set of groups and an updated set of different behavioural patterns.

The obtained behavioural patterns may be applied or used in different ways, either by the network management center or by remote devices. According to different embodiments, the network management center comprises at least one of:
- a data store for storing the identified set of behavioural patterns; and/or
- a visualization unit for providing visuals of the behavioural patterns; and/or
- a tracker module for providing a signal when a new behavioural pattern is identified.

According to a second aspect, the disclosure relates to a computer-implemented method for determining patterns in a wireless communication network comprising:
- obtaining a first set of metric data sets for different first time periods; and wherein a metric data set comprises a second set of metric data vectors for consecutive second time periods within each first time period; and wherein a data vector comprises a third set of wireless device metrics; and wherein each wireless device metric is indicative for a performance of the wireless communication network in relation with the respective second time period; and
- determining a fourth set of groups of metric data sets from the first set of metric data sets such that each group only comprises metric data sets with similar metric data vectors; and
- identifying from the fourth set a set of different behavioural patterns within the wireless communication network.

According to a third aspect, the disclosure relates to a computer program product comprising a computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

### Brief Description of the Drawings

Fig. 1 illustrates a plurality of metric data sets according to an embodiment of the invention; and
Fig. 2 illustrates steps performed by a network management center for determining behavioural patterns in a wireless network according to an embodiment of the invention; and
Fig. 3 illustrates steps performed by a network management center for updating previously determined behavioural patterns in a wireless network according to an embodiment of the invention; and
Fig. 4 illustrates a network management center according to an embodiment of the invention that determines behavioural patterns from a wireless network and that provides a visualization of the patterns to a remote computing system; and
Fig. 5 illustrates a suitable computing system for performing steps according to various embodiments of the invention.

### Detailed Description of Embodiment(s)

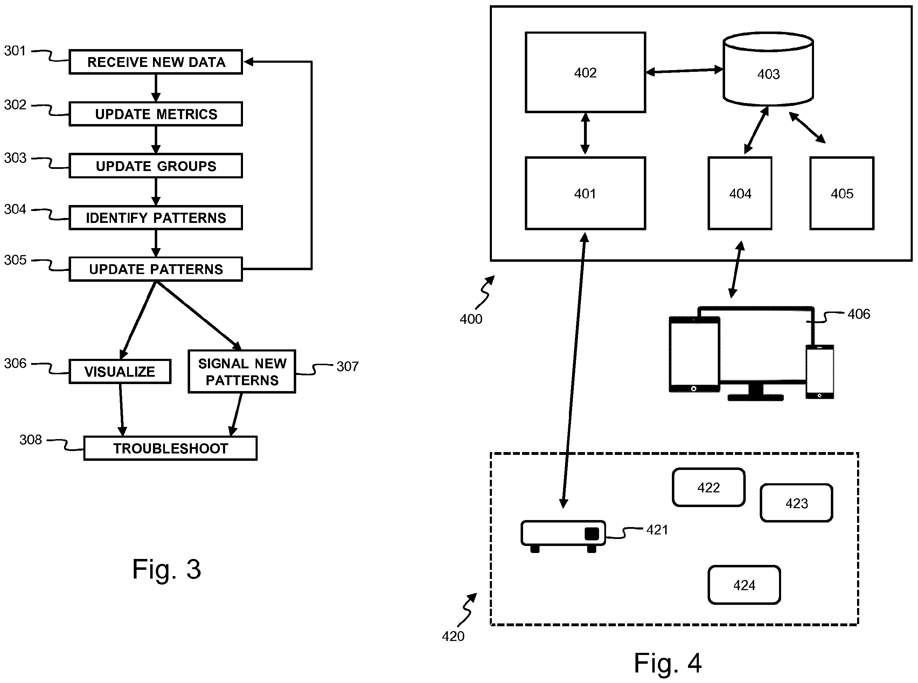

Fig. 4 illustrates a network management center 400 according to an embodiment of the invention. Network management center 400 may be used for analysing the performance or behaviour of a wireless communication network 420, e.g., a Wi-Fi network comprising one or more access points 421 and wireless communication devices 422, 423, 424. Network management center 400 comprises a monitoring module 401, a pattern generation module 402, a data store or library 403, a visualization unit 404 and tracker module 405. Modules 401-405 are configured to perform various steps according to different embodiments as will be described below.

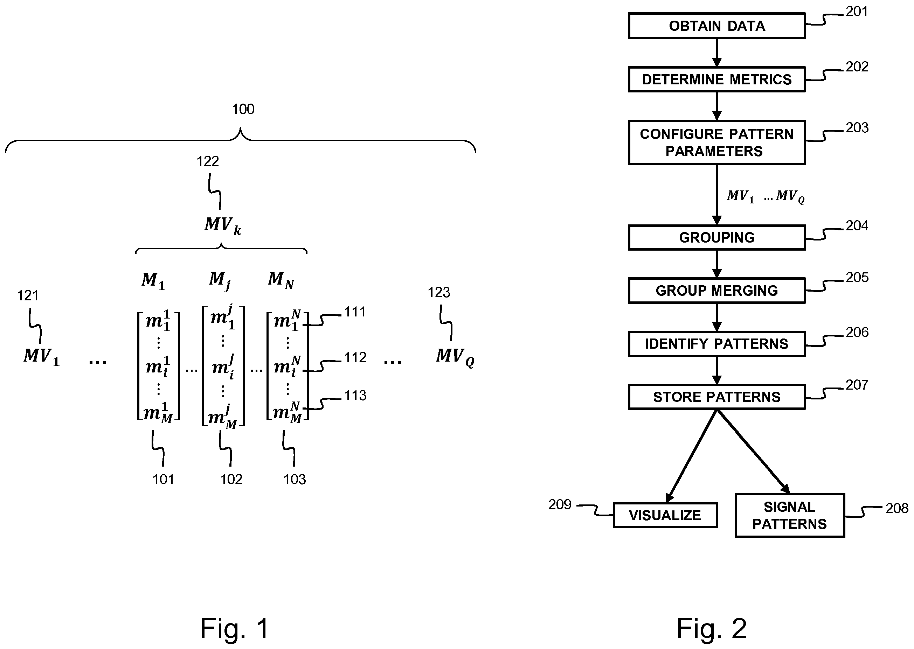

Fig. 2 illustrates steps performed by network management center 400 according to an embodiment of the invention. In step 201 monitoring module 401 obtains performance data from a wireless communication network 420. The data is collected at a certain collection frequency, e.g., every 10 to 120 minutes. Such data may for example be collected according to the TR-181 Device Data Model for remote management according to TR-069 as published by the broadband forum. The data may then comprise one or more of the following parameters:
- Device.WiFi.Radio.{i}.Stats.BytesSent
- Device.WiFi.Radio.{i}.Stats.BytesReceived
- Device.WiFi.Radio.{i}.Stats.ErrorsSent
- Device.WiFi.Radio.{i}.Stats.ErrorsReceived
- Device.WiFi.Radio.{i}.Stats.PacketsSent
- Device.WiFi.Radio.{i}.Stats.PacketsReceived
- Device.WiFi.Radio.{i}.Stats.DiscardPacketsSent
- Device.WiFi.Radio.{i}.Stats.DiscardPacketsReceived
- Device.WiFi.SSID.{i}.Stats.RetransCount
- Device.WiFi.SSID.{i}.Stats.FailedRetransCount
- Device.WiFi.NeighboringWiFiDiagnostic.Result.{i}.
- Device.WiFi.AccessPoint.{i}.AssociatedDeviceNumberOfEntries
- Device.WiFi.Radio.{i}.CCARequest
- Device.WiFi.Radio.{i}.CCAReport

This way, monitoring module 401 obtains various performance parameters from access point 421 and wireless communication devices 422, 423, 424 which relate to the performance of the wireless communication network 420 during the past time period, i.e., over the last 10 to 120 minutes. The complete data collection process is performed over a second and longer period of time in the order days. This second, longer period is a configurable parameter, but is preferably at least 10 days, more preferably around 30 days.

When all data is collected, the method proceeds to step 202 wherein the obtained parameters are transformed into a set of metrics, preferably for each wireless communication device 421-424 in network 420. Examples of the derived metrics are:
- downstream throughput in the device;
- upstream throughput in the device;
- number of devices connected to the respective device;
- interference metric indicative for an amount of interference encountered by the device derived from, for example, an error ratio counter parameter;
- contention metric indicative for the amount of contention encountered by the respective device on the channel derived, for example, from the normalized channel busy time;
- coverage metric indicative for the coverage achieved by the respective device;
- overload metric for example derived from the status of the queue buffer in the respective device;

After determining the metrics, a series of metric data vectors is obtained, i.e., a data vector for each smaller period wherein each vector comprises values for each of the derived metrics. These metric data vectors will then be used for deriving behavioural patterns in the monitored wireless network 420.

In the next step 203, the pattern generation module 402 first configures the obtained metric data vectors in order to define how the behavioural patterns will be defined and determined. As a first configuration, the data vectors are grouped in metric data sets. This is illustrated in Fig. 1 wherein a metric data set 121, 122, 123 comprises all metric data vectors 101, 102, 103 that are obtained within a single day. Therefore, when data has been collected in step 201 for a Q amount of days, then *Q* metric data sets (100) *MVₖ* (122) with *k* = 1 ... *Q* are obtained.

As a second configuration, also the time window over which the pattern detection is performed is determined. This time window defines a period in the metric data set over which the pattern detection is performed. For example, when the metric data set covers a 1-day period, then the time window *TW* indicates a starting time *Tₛₜₐᵣₜ* and ending time *T_{end}* during this 1-day period wherein 0 ≤ *Tₛₜₐᵣₜ* < *T_{end}* ≤ 24. Consequently, pattern generation module 402 then removes the metric data vectors from all metric data sets 100 that fall outside this time window *TW.*

As a third configuration, the feature set *FS* = [*f*₁, ..., *f_{N}*] over which the behavioural pattern will be performed is determined wherein the feature set is a subset of the metrics determined in step 202. Based on the feature set FS, metrics are then removed from the metric data vectors *M*₁ ... *Mⱼ* ... *M_{N}* (101...103) within the different metric data sets *MV*₁ ... *MV_{Q}* (121-123).

As a fourth configuration, a similarity measure vector µ = [µ₁, ..., µM] is obtained which will be used for determining the different behavioural patterns.

As a fifth configuration, a confidence level C is determined corresponding to the minimum number of data sets in a group in order for the group to become a behavioural pattern as will be described further below.

The above configurations may be user-configurable in the network management center such that the determination of a behavioural pattern may be tweaked to the user's needs.

At the end of step 203, metric data sets 100 are obtained. Each metric data set 122 comprises metric data vectors 101, 102, 103 within time window *TW* and each metric data vector 103 comprises values 111, 112, 113 of the metrics according to the configured feature set *FS.*

The method then proceeds to step 204 wherein a grouping of the data sets is performed thereby obtaining a set of groups *G =* [*G*₁, ..., *G_{T}*] wherein each group corresponds to a different behavioural pattern of the wireless network 420. The groups are formed such that a group only comprises corresponding metric data vectors that are similar according to the similarity measure vector, i.e., where the difference between two respective metric data vectors from each data set is not more than the similarity measure vector. By this grouping step 204, data sets may occur in more than one group. The grouping may be performed according to the following sequence:
- Compare two consecutive data sets *MVₖ* and *MV*_{*k*+1}. When the difference between the two data sets is smaller than the similarity measure vector, then the consecutive data sets *MVₖ* and *MV*_{*k*+1} are considered as similar.
- In case that the data sets are similar, then add the two data sets *MVₖ* and *MV*_{*k*+1} to a temporary group *Gₜₑₘₚ*. If *MVₖ* is already a member of a previous group *G_{old}* then *MV*_{*k*+1} is compared with all data sets in the group *G_{old}*. If *MV*_{*k*+1} is similar to all data sets it is added to *G_{old}*. Otherwise, *MV*_{*k*+1} is grouped with instances with whom it is similar to into a new group *G_{new}*.
- In case that the data sets are not detected as similar, then *MV*_{*k*+1} defines the new group *G_{new}*;
- The above steps are repeated for all data sets *MVₖ*;
- The result is then a set of groups denoted as *G* = [*G*₁, ...,̅ *G_{T}*]; wherein one data set may be part of more than one group.

The method then proceeds to the next step 205 where the pattern generation module 402 performs a group merging operation. The merging is done by first comparing the data sets between the different groups. Then, when two groups have more data sets in common that the confidence level C, the two groups are merged into a single group. This merging operation is performed by comparing all groups *G* = [*G*₁, ..., *G_{T}*] with each other.

The method then proceeds to steps 206 where a group is identified as a behavioural pattern when the group comprises more data sets than the confidence level C.

In the next step 207, the pattern generation module 402 stores the identified behavioural patterns in the data store 403.

The network management center may use the stored behavioural patterns for different purposes in different ways. For example, network management center 400 may comprise a visualization unit or module 306 that creates under step 209 a visual representation of the different identified behavioural patterns. This visual representation may then be shown to a user by a user device 406 that retrieves the visual representations from the network management center and displays them on a display to the user. Network management center 400 may also analyse the behavioural patterns in a behaviour tracker module 405 to detect for example changes in the behaviour of the wireless network 420. When a change in the behaviour of the network is detected then this change may be signalled under step 208.

After determining different behavioural patterns by performing the steps illustrated by Fig. 2, the network management center 400 may continuously update the patterns in data store 403 as illustrated by the steps of Fig. 3. In step 301, the monitoring module receives continuously new parameters about the performance of wireless network 420 by polling the status of network 420 every 10 to 120 minutes. When the monitoring module has received data for the larger period, for example during the one-day period, the method proceeds to step 302 and transforms the obtained parameters to the metric data vectors.

Then, in step 303, the pattern generation module updates the stored groups of data sets with the new obtained metric data vectors, i.e., by performing following steps:
- define a new, subsequent metric data set with metric data vectors; and
- prune the metric data vectors according to the time window *TW* and to the feature set FS; and
- add the data set to one or more of the groups *G* = [*G*₁, ..., *G_{T}*] and/or add the data set to a new group *G*_{*T*+1} according to the similarity vector; and
- merge the groups by comparing the newly formed group with the existing groups as explained with reference to 205;

Then, in step 304, new behavioural patterns are detected when a new group comprises more than the confidence level C of data sets and, subsequently, the behavioural patterns in data 403 are updated accordingly under step 305.

The updated data store 403 may trigger an update of the visualization unit 404 under step 306 and/or may trigger the tracking module 405 to signal a new pattern under step 307. This updated information may then further be used to troubleshoot problems in the wireless network 420 under step 308.

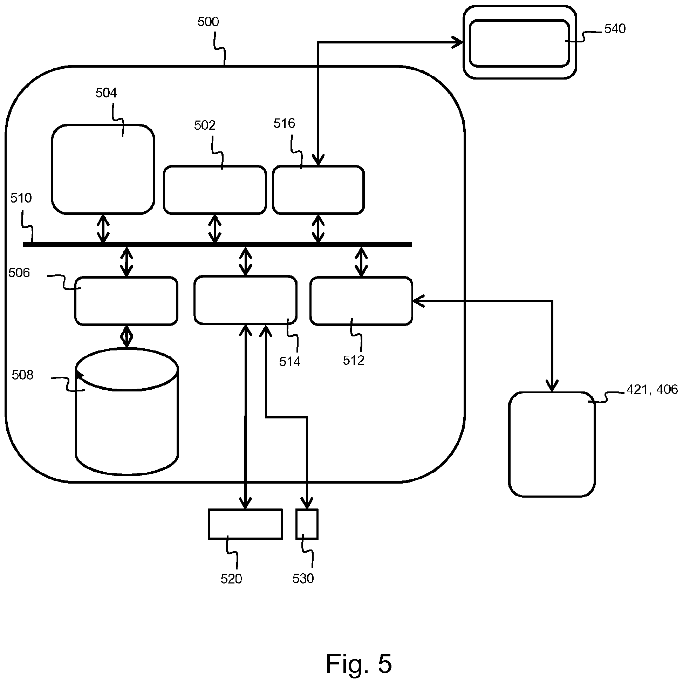

Figure 5 shows a suitable computing system 500 for performing the steps according to the above embodiments. Computing system 500 may be used as the network management center 400 for determining the behavioural patterns in wireless network 420. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems such as for example with wireless access point 421 to acquire the parameters at regular intervals or with graphical system 406 for displaying the generated visual representations of the identified behavioural patterns. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A network management center (400, 500) for determining patterns in a wireless communication network (420) comprising:
- a monitoring module (401) arranged for obtaining (201, 202) a first set (100) of metric data sets (121, 122, 123) for different first time periods; and wherein a metric data set (122) comprises a second set of metric data vectors (101, 102, 103) for consecutive second time periods within each first time period; and wherein a data vector (103) comprises a third set of wireless device metrics (111, 112, 113); and wherein each wireless device metric (111, 112, 113) is indicative for a performance of the wireless communication network (420) in relation with the respective second time period; and
- a pattern generation module (402) arranged for determining (204) a fourth set of groups of metric data sets from the first set of metric data sets such that each group only comprises metric data sets with similar metric data vectors thereby identifying (206) by the fourth set a set of different behavioural patterns within the wireless communication network.

2. Network management center (400, 500) according to claim 1 wherein the wireless device metrics comprise at least one of the group of:
- a downstream throughput; and
- an upstream throughput; and
- a number of connected devices; and
- an interference measure; and
- a contention measure; and
- a coverage measure; and
- an overload measure.

3. Network management center (400, 500) according to claim 1 wherein the monitoring module (401) is further arranged to acquire (201) device parameters from one or more wireless devices (421-424) in the wireless communication network (420) within at least every second time period and to determine (202) from the parameters the respective wireless device metrics.

4. Network management center (400, 500) according to claim 3 wherein the device parameters comprise at least one of the group of:
- a total number of bytes sent; and
- a total number of bytes received; and
- a total number of erroneous bytes sent; and
- a total number of erroneous bytes received; and
- a total number of packets sent; and
- a total number of packets received; and
- a total number of sent packets that were discarded; and
- a total number of received packets that were discarded; and
- a total number of retransmitted packets; and
- a total number of failed retransmissions; and
- a total number of associated devices; and
- a total number of clear channel assessment requests; and
- a total number of clear channel assessment reports.

5. Network management center (400, 500) according to claim 1 wherein the wireless communication network (420) is a Wi-Fi network.

6. Network management center (400, 500) according to claim 1 wherein the first time period is around 1 day and/or wherein the second time period is between 10 minutes and 120 minutes.

7. Network management center (400, 500) according to claim 1 wherein a behavioural pattern is defined by a similarity vector; and wherein the pattern generation module (402) is further arranged to classify two metric data vectors as similar when the difference between the two metric data vectors is smaller than the similarity vector.

8. Network management center (400, 500) according to claim 1 wherein the pattern generation module is further arranged to only identify (206) a group of the fourth set as a behavioural pattern when an amount of metric data sets in the group is larger than a first predefined threshold.

9. Network management center (400, 500) according to claim 1 wherein the pattern generation module is further arranged to merge (205) groups of the fourth sets into a merged group when the groups overlap by at least a predefined number of metric data sets.

10. Network management center (400, 500) according to claim 1 wherein the monitoring module (401) is further arranged to obtain (301, 302) a new metric data set; and wherein the pattern generation module (402) is further arranged to update (303) the fourth set of groups and the set of different behavioural patterns with the new metric data set thereby obtaining an updated fourth set of groups and an updated set of different behavioural patterns.

11. Network management center (400, 500) according to claim 1 further comprising at least one of:
- a data store (403) for storing (207, 305) the identified set of behavioural patterns; and
- a visualization unit (404) for providing (306) visuals of the behavioural patterns; and/or
- a tracker module (405) for providing (307) a signal when a new behavioural pattern is identified.

12. Computer-implemented method for determining patterns in a wireless communication network (420) comprising:
- obtaining (201, 202) a first set (100) of metric data sets (121, 122, 123) for different first time periods; and wherein a metric data set (122) comprises a second set of metric data vectors (101, 102, 103) for consecutive second time periods within each first time period; and wherein a data vector (103) comprises a third set of wireless device metrics (111, 112, 113); and wherein each wireless device metric (111, 112, 113) is indicative for a performance of the wireless communication network (420) in relation with the respective second time period; and
- determining (204) a fourth set of groups of metric data sets from the first set (100) of metric data sets such that each group only comprises metric data sets with similar metric data vectors; and
- identifying (206) from the fourth set a set of different behavioural patterns within the wireless communication network (420).

13. A computer program product comprising a computer-executable instructions for performing the method according to claim 12 when the program is run on a computer.

14. A computer readable storage medium comprising the computer program product according to claim 13.

15. A data processing system (500) programmed for carrying out the method according to claim 13.
